(19) Europäisches Patentamt
European Patent Office
Office européen des brevets

(11) **EP 4 469 954 B1**

(12) **EUROPEAN PATENT SPECIFICATION**

(45) Date of publication and mention
of the grant of the patent:
**28.05.2025  Bulletin 2025/22**

(21) Application number: **23702196.9**

(22) Date of filing: **19.01.2023**

(51) International Patent Classification (IPC):
*G06Q 10/04* *(2023.01)*

(52) Cooperative Patent Classification (CPC):
**G06Q 10/04;** Y02T 10/70; Y02T 10/7072;
Y02T 90/12

(86) International application number:
**PCT/FI2023/050044**

(87) International publication number:
**WO 2023/152423 (17.08.2023 Gazette 2023/33)**

(54) **OPTIMIZATION OF A NETWORK OF ELECTRIC VEHICLE CHARGING STATIONS**

OPTIMIERUNG EINES NETZES VON LADESTATIONEN FÜR ELEKTROFAHRZEUGE

OPTIMISATION D'UN RÉSEAU DE STATIONS DE CHARGE DE VÉHICULE ÉLECTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.02.2022  FI 20225124**

(43) Date of publication of application:
**04.12.2024  Bulletin 2024/49**

(73) Proprietor: **LIIKENNEVIRTA OY / VIRTA LTD
00180 Helsinki (FI)**

(72) Inventor: **AHTIKARI, Jussi
00730 Helsinki (FI)**

(74) Representative: **Papula Oy
P.O. Box 981
00101 Helsinki (FI)**

(56) References cited:
KR-B1- 102 298 279       US-A1- 2010 211 643
US-A1- 2015 262 206       US-A1- 2019 152 339
US-A1- 2020 156 493       US-A1- 2021 237 609
US-B2- 10 083 413         US-B2- 9 620 970

• **RASTEGARFAR NAVID ET AL: "Optimal
placement of fast charging station in a typical
microgrid in Iran", 2013 10TH INTERNATIONAL
CONFERENCE ON THE EUROPEAN ENERGY
MARKET (EEM), IEEE, 27 May 2013 (2013-05-27),
pages 1 - 7, XP032486542, DOI: 10.1109/
EEM.2013.6607284**
• **ALTUNDOGAN TURAN GOKTUG ET AL: "Genetic
Algorithm Approach based on Graph Theory for
Location Optimization of Electric Vehicle
Charging Stations", 2021 INNOVATIONS IN
INTELLIGENT SYSTEMS AND APPLICATIONS
CONFERENCE (ASYU), IEEE, 6 October 2021
(2021-10-06), pages 1 - 5, XP034024245, DOI:
10.1109/ASYU52992.2021.9598951**
• **MICHAEL HARDINGHAUS ET AL: "Real-world
insights on public charging demand and
infrastructure use from electric vehicles",
ENVIRONMENTAL RESEARCH LETTERS,
ENVIRONMENTAL RESEARCH LETTERS, BR,
vol. 15, no. 10, 22 September 2020 (2020-09-22),
pages 104030, XP020357448, ISSN: 1748-9326,
[retrieved on 20200922], DOI: 10.1088/1748-9326/
ABA716**

• EJAZ WALEED ET AL: "Charging infrastructure placement for electric vehicles: An optimization prospective", 2017 27TH INTERNATIONAL TELECOMMUNICATION NETWORKS AND APPLICATIONS CONFERENCE (ITNAC), IEEE, 22 November 2017 (2017-11-22), pages 1 - 6, XP033278991, DOI: 10.1109/ ATNAC.2017.8215427

## Description

## TECHNICAL FIELD

The present application generally relates to electric vehicle charging stations. In particular, some example embodiments of the present application relate to a method for optimization of a network of electric vehicle charging stations.

## BACKGROUND

Charging station networks for electric vehicles are expanding as the popularity of electric vehicles is rising. New charging stations can be put to places where there are no charging stations yet based on guesses of a good location in order to provide an extensive charging network for users. However, it is not efficient to place charging stations to places which do not answer needs of the users of the electric vehicles. The document US10083413B2 anticipates a scheme for proposing locations to install electric vehicle charging stations.

## SUMMARY

Claims 1, 11-13 disclose the present invention. Preferred embodiments are disclosed in claims 2-10. This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may enable providing more accurate and extensive information of utilization of a network of electric vehicle charging stations in cases where accurate data of charges from each charging station of the network is not available. The network may comprise multiple electric vehicle charging stations having different properties and operators which may not share detailed data of usage of their charging stations to others. Hence, optimization of the network is improved as decision on new locations for charging stations can be made based on the utilization estimates for the entire network. This and other benefits may be achieved by the features of the independent claims. Further implementation forms are provided in the dependent claims, the description and the drawings.

According to a first aspect, a computer-implemented method is provided. The method comprises obtaining attributes of a plurality of electric vehicle charging stations, the attributes comprising location information and state changes associated to a charge of an electric vehicle of each of the plurality of electric charging stations; obtaining reference data comprising accurate values of a plurality of utilization metrics comprising charging power for a set of the plurality of electric vehicle charging stations; determining an estimate charge detail record comprising a plurality of estimate utilization metrics for each of the plurality of electric vehicle charging stations based on the attributes and the reference data, the estimate utilization metrics comprising a duration of the charge based on consecutive state changes and timestamps of the state changes and used energy based on the duration and the reference data; obtaining criteria for installation of a new electric vehicle charging station; and outputting data indicative of utilization of electric vehicle charging stations by location based on the estimate charge detail records and the criteria.

In an embodiment, attributes comprise a maximum power and the plurality of electric vehicle charging stations are categorized based on their maximum power; and the reference data comprises an average charging power for each category; and wherein the used energy is determined based on the average power of the category of the respective electric vehicle charging station.

In an embodiment, in addition or alternatively, the estimate utilization metrics comprise a revenue indicative of a user demand determined based on the used energy, the duration, a session fee, a price per minute and a price per kilowatt-hour.

In an embodiment, in addition or alternatively, the plurality of utilization metrics of the reference data comprises at least one of used energy, a duration or a revenue for charges of the set of electric vehicle charging stations, and the method further comprises: determining combined values for at least one of the used energy, the duration or the revenue for the set of the plurality of electric vehicle charging stations based on the reference data and based on the estimate charge detail records; determining an adjustment factor for at least one estimate utilization metric based on a difference between the combined value determined based on the estimate charge detail records and the combined value determined based on the reference data; and updating each of the estimate charge detail records based on the at least one adjustment factor.

In an embodiment, in addition or alternatively, the plurality of estimate utilization metrics comprise a number of charges based on a number of the consecutive state changes.

In an embodiment, in addition or alternatively, the plurality of estimate utilization metrics comprise a utilization rate based on a total duration of charges of a day divided by minutes of the day.

In an embodiment, in addition or alternatively, the method comprises determining one or more location types for each of the estimate charge detail records based on location information of the respective charging station; and wherein the criteria comprise at least one location type for which a new electric vehicle charging station is considered to be installed.

In an embodiment, in addition or alternatively, each estimate charge detail record comprises a timestamp; and wherein the criteria comprise at least one time interval and the outputted data comprises a growth factor for at least one of the estimate utilization metrics based on the criteria and the timestamps of the estimate charge detail records.

In an embodiment, in addition or alternatively, the attributes comprise model information of the electric vehicle charging station, and the output data comprises a preferred type of a charging station based on the estimate utilization metrics.

In an embodiment, in addition or alternatively, the criteria comprise one or more thresholds for at least one of the estimate utilization metrics or the growth factors, and the output data comprises recommendations for locations to install a new charging station based on the one or more thresholds.

In an embodiment, in addition or alternatively, the criteria comprise at least one of a geographical location, a group of geographical locations, one or more location types, one or more thresholds for an optimal location, or one or more estimate utilization metrics.

In an embodiment, in addition or alternatively, the method comprises determining a location score for a certain location based on the criteria and the estimate charge detail records associated with the location; and wherein the output data comprises the location score.

According to a second aspect, there is provided a computing device, the computing device comprising at least one processor; and at least one memory including computer program code; the at least one memory and the computer code configured to, with the at least one processor, cause the computing device to perform the method of the first aspect.

According to a third aspect, there is provided a computer program product comprising instructions which, when the program is executed by a computer, cause the computer to carry out the method of the first aspect.

According to a fourth aspect, there is provided a computer-readable medium comprising instructions which, when executed by a computer, cause the computer to carry out the method of the first aspect.

Many of the attendant features will be more readily appreciated as they become better understood by reference to the following detailed description considered in connection with the accompanying drawings.

**BRIEF DESCRIPTION OF THE DRAWINGS**

The accompanying drawings, which are included to provide a further understanding of the example embodiments and constitute a part of this specification, illustrate example embodiments and together with the description help to explain the principles of the example embodiments. In the drawings:

FIG. 1 illustrates an example flow chart of a method for generating improved estimates of utilization of electric vehicle charging stations to optimize a network of electric vehicle charging stations according to an example embodiment;

FIG. 2 illustrates an example of a method for optimizing a network of electric vehicle charging stations based on data indicative of a utilization of the current network for positioning of new electric vehicle charging stations, according to an example embodiment;

FIG. 3 illustrates an example of obtained attributes and created estimate charge detail records of electric vehicle charging stations, according to an example embodiment;

FIG. 4 illustrates an example of an updated estimate charge detail record based on a reference charge detail record, according to an example embodiment;

FIG. 5 illustrates an example of a method for updating estimate charge detail records based on adjustment factors, according to an example embodiment;

FIG. 6 illustrates an example of output data indicative of utilization of a plurality of electric vehicle charging stations, according to an example embodiment;

FIG. 7 illustrates an example of a user interface configured to output data indicative of utilization of a plurality of electric vehicle charging stations based on set criteria, according to an example embodiment;

FIG. 8 illustrates another example of a user interface configured to output data indicative of utilization of a plurality of electric vehicle charging stations based on set criteria, according to an example embodiment;

FIG. 9 illustrates an example of a growth rate of utilization of electric vehicle charging stations based on a location, according to an example embodiment;

FIG. 10 illustrates an example calculation for growth rates for sets of electric vehicle charging stations, according to an example embodiment,

FIG. 11 illustrates an example of output data comprising growth rates in utilization of electric vehicle charging stations based on set criteria, according to an example embodiment;

FIG. 12 illustrates an example of user interface and output data for optimization of a network of electric vehicle charging stations based on obtained attributes, generated data and set criteria, according to an example embodiment;

FIG. 13 illustrates an example of data provided for estimating new charging station locations based on location scores, according to an example embodiment;

FIG. 14 illustrates an example of a computing device configured to practice one or more example embodiments, according to an example embodiment.

FIG. 15 illustrates an example of a computing device configured to obtain data from multiple data sources to optimize network of electric vehicle charging stations, according to an example embodiment.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of operations for constructing and operating the example. However, the same or equivalent functions and sequences may be accomplished by different examples.

Charging stations (CS) are used to charge electric vehicles (EV). There exists a big amount of different charging station operator (CPO) companies that own and operate different charging stations on various places.

Charging stations may have different publicly available Point of Interest (POI) data. In general, POI may refer to a specific geographical point location that someone may find useful or interesting. POI data may comprise the location information and additional data, such as a name, time information or other data that may be found useful for the interested party.

POI data may have both static and dynamic attributes. The static POI attributes may comprise, for example, a location (coordinates), connectors (Type2, CCS, CHaDeMo etc.), a maximum charging power (kW), an address (city, street name, number etc.), a country etc. In general, static POI data comprises different attributes of a charging station that may not usually change.

Dynamic POI data may describe a current state of a charging station. The dynamic states may comprise, for example, available, faulted, charging, unavailable, offline and/or reserved. However, there may not be one standard for dynamic POI data or states, and they may differ depending on CPO and on the POI data. Also a price for charging may be comprised in the dynamic POI data.

POI data, both static and dynamic, may be available from various different public POI data sources. The POI data may be obtained, for example, from different operators of charging stations. Many companies working with EV charging need different data to optimize their charging network structure. The data of interest may comprise, for example, how many charges there are in certain locations, what are utilization rates and how much energy is charged on different stations. However, the needed data may not be public information. Rather many companies want to keep this information confidential and are not sharing their data publicly.

An example embodiment enables making optimal decisions on placement of electric vehicle charging stations. Advantageously, a simple method is provided to gain improved data for deciding installation locations of new charging stations which enables efficient utilization of the new charging stations. The optimization may be performed with publicly available data such that detailed data from owners of charging stations may not be needed. This means, that utilization metrics of a network of CSs may be accurately estimated without an access to the actual measurements of the utilization metrics. Moreover, the estimates can be performed for the entire network based on the public data even when the network comprises charging stations of different manufacturers and different operators, and in any location worldwide.

Optimization may be improved, as the data is not based on charging stations of a single operator or geographical area but data from multiple sources may be aggregated for better decisions. Positioning decisions may be based on generated information about worst locations for charging stations where there may be already a lot of charging stations with low utilization rate, and for best locations with high utilization rates, for example. Further, the data may provide an insight on how different attributes associated with the charging stations affect utilization rates of the charging stations, such as connection types, maximum powers or a pricing type.

In an example embodiment, at least one dynamic operative state is used to calculate a number of charging sessions. Further, POI data may be used to create estimations of, for example, duration of a charge at a specific charging station, energy used for the charge, and utilization rate of the charging station. The estimates may indicate user demand for charging stations at different kind of locations. Attractiveness of different charging station types at different locations may be estimated based on the POI data.

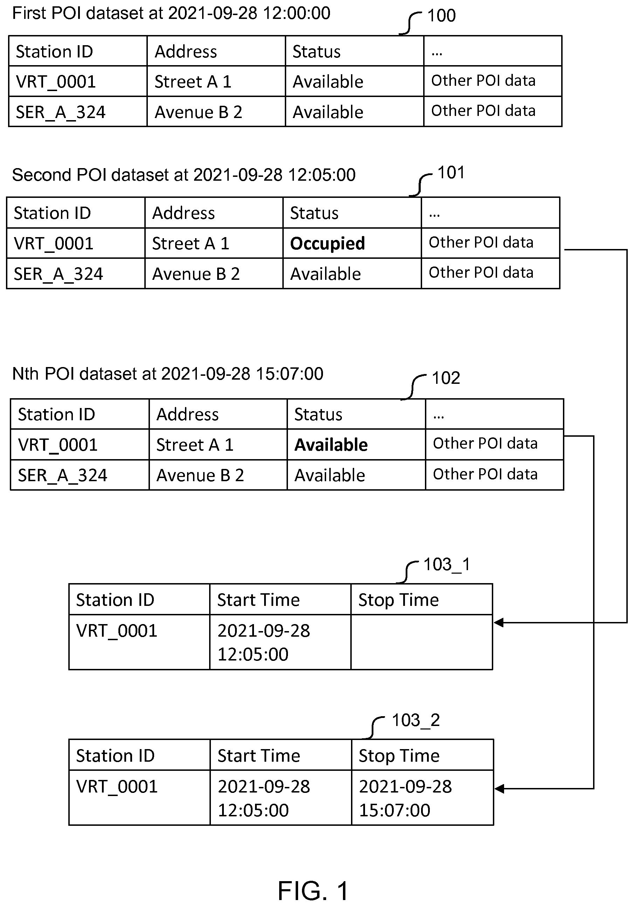

FIG. 1 illustrates an example of obtained attributes and created estimate charge detail records of electric vehicle charging stations, according to an example embodiment.

In FIG. 1, there is an example of a first obtained POI dataset 100 and a second obtained POI dataset 101. The POI datasets 100, 101 may comprise various types of information associated with one or more charging stations. The POI data may comprise a plurality of attributes of the charging stations such as an identity of the charging station, an address, a status, a model, a maximum power, etc.

In the second POI dataset 101, there may be a status change from available (at 100) to occupied for one of the charging stations. The status change may be indicated by consecutive dynamic operative states with changed data. Hence, charging at a respective station (VRT_0001) may have started.

In response to the status change, a new CDR record 103_1 may be created. The CDR record 103_1 may comprise, for example, identity of the station and a start time of the charging event, i.e., timestamp of the data update associated with the status change. Later, another POI dataset 102 may indicate again a status change of the charging station. The status may have now changed from occupied to available, indicating the charging has stopped. In response, the CDR record 103_2 may be updated with a timestamp of the new status change indicative of the stop time of the charging. In addition, or alternatively, total duration of the charging (from start to stop) may be updated to the CDR based on the timestamps.

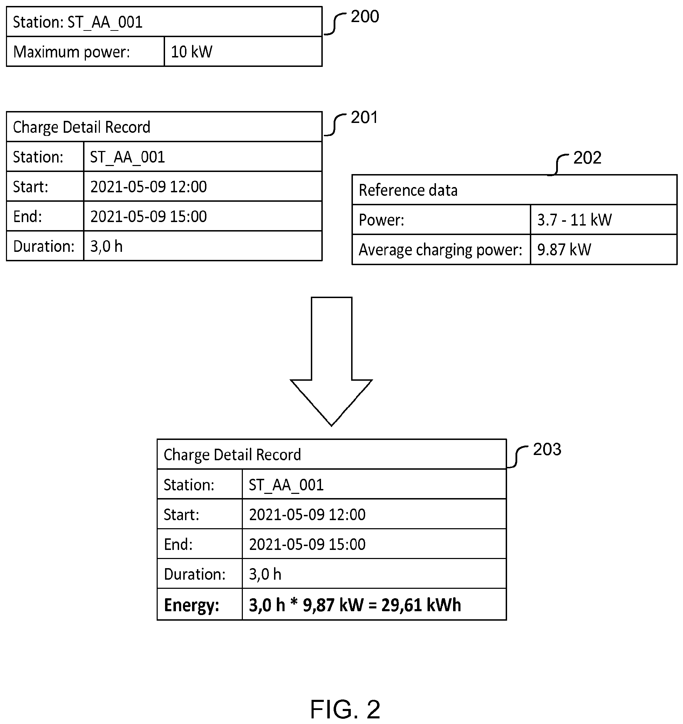

FIG. 2 illustrates an example of an updated estimate charge detail record 203 based on a reference data, according to an example embodiment. In general, a charge detail record may comprise a plurality of utilization metrics of a CS, such as a status change, a timestamp of the status change, a number of charges, duration of each charge, used energy per charge and/or a utilization rate of the charging station. The charge detail record may further comprise attributes associated with the CS, such as its ID, model information, connector types, geographical location, a maximum power and/or an operator.

Based on attributes from the POI data 200 it is known that maximum power of a charging station is 10 kW. The estimation CDR 201 may comprise identity of the charging station and a start time, an end time and duration of a charge at the charging station. The reference data 202 may comprise an average charging power value of a category selected based on the maximum power of the charging station.

Because electric vehicles may not charge from start to stop with full power, an average power associated with the maximum power may be determined based on reference data 202. A reference dataset may comprise detailed data with known values for at least one utilization metric. The reference data 202 may be obtained from a set of electric vehicle charging stations.

By simply calculating E = Pmax*t would produce incorrect results for the used energy. The average power on the reference data 202 may be calculated by listing all charges in the reference data, and power for each charge (

$$\overline{P_{charge}} = \frac{E}{t}$$

, where E denotes the used energy and t time, i.e., duration of the charge). The charges may be grouped to categories based on maximum power of the charging station where the individual charge was made. For example, the maximum powers of charging stations may be divided to a plurality of categories, such as 1 kW - 3.6 kW, 3.7 kW - 11 kW, 11.1 kW - 22 kW, 22.1 kW - 50 kW, 50.1 kW - 150 kW, > 150 kW. The categories may be based on typical charging station models. The average power of each category may be calculated by dividing the total power for charges with a total number of the charges in the category, as follows: $P_{category\_avg} =$

$$\sum \frac{P_{charge}}{ChargeCount_{category}}$$

, wherein $ChargeCount_{category}$ denotes for the total number of charges for an charging station in the category.

In an example embodiment, a duration of a charge and maximum power of the charging station used for the charge may be obtained from public data, such as the POI data as illustrated in FIG. 1. Then, instead of using $E = Pmax*t,$ which would provide wrong result, the energy used for the charge may be calculated as follows: $E = P_{category\_avg}*t.$ Hence, a more accurate value for the used energy may be obtained for the estimated CDR.

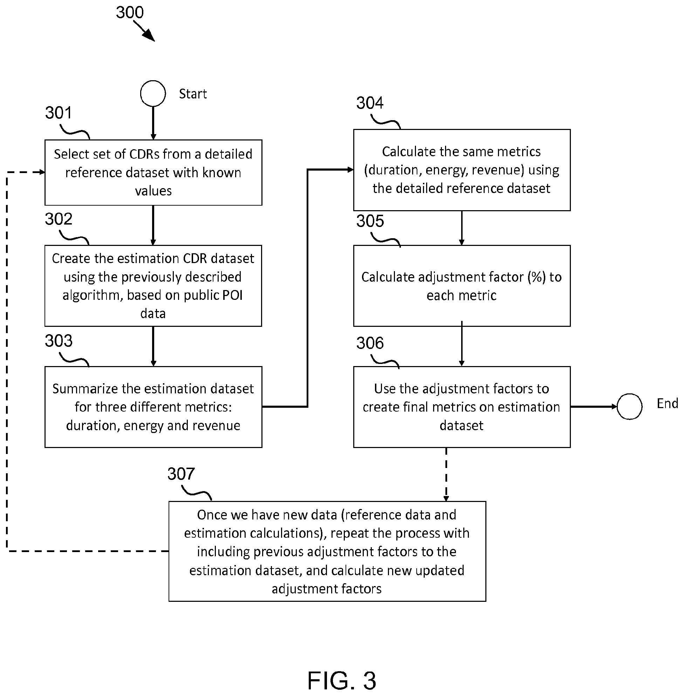

FIG. 3 illustrates an example flow chart of a method 300 for generating improved estimates of utilization of electric vehicle charging stations to optimize a network of electric vehicle charging stations, according to an example embodiment.

At 301, a set of charge detail records (CDR) from a reference dataset is selected. The reference dataset may comprise detailed data with known values for parameters of interest obtained from a set of charging stations.

At 302, an estimation CDR dataset may be created based on public data, such as POI data. The estimation CDR dataset may comprise CDRs created for the same charging stations for which the set of CDRs from the reference dataset is selected.

At 303, a plurality of estimation utilization metrics may be determined based on the estimation CDRs. The utilization metrics may comprise an estimation for, for example, at least one of duration of charge(s), energy usage and utilization rate. Each of the plurality of utilization metrics, determined for the same set of charging stations for which the reference set was selected, may be summarized for a combined value of the estimate utilization metric.

In addition to the energy usage, duration and utilization rate, also other metrics aiding to optimize the charging network may be calculated. One of the metrics may be revenue of the charging session(s). The revenue may be used as an indication of user demand and attractiveness of the location for charging. Hence, revenue may be used to estimate development needs of the charging network. Charging price of the charging station may be known from the POI dataset. The charging may be priced, for example, using a fixed session fee, a time-based fee or an energy-based fee. Total revenue of a single charge may be calculated with: *Revenue = (1 = session fee) + (time * time - based fee) + (energy * energy - based fee).* In the equation, *time* is the duration of charge and *energy* the energy used as calculated based on the duration of charge and the average power from the reference set.

At 304, the plurality of utilization metrics may be calculated based on the reference dataset. Each of the reference utilization metrics associated with the set of charging stations may be summarized for a combined value of the respective reference utilization metric.

At 305, adjustment factors may be calculated for each of the plurality of utilization metrics. The adjustment factor may comprise a percentage value indicative of how much the estimated utilization metrics need to be adjusted.

A difference between the estimated and reference-based utilization metrics may be calculated to determine the adjustment factor. For example, the result may be that the duration is in reality 3.2 % lower than estimated, used energy is 4.1% higher, and revenue is 2.5 % higher. With the adjustment factors, estimated utilization metrics for any charging station may be updated using detailed, accurate data obtained from the reference database with actual values.

At 306, final estimate utilization metrics may be determined based on the adjustment factors and the estimated CDRs. For example, if a normal estimation method would tell us that a duration of a charge is 100 minutes, 100 x 1.032 = 103.2 minutes may be used as the number for duration. At 307, correction of the estimates may be repeated on regular intervals and then use the latest numbers in estimations in the CDRs.

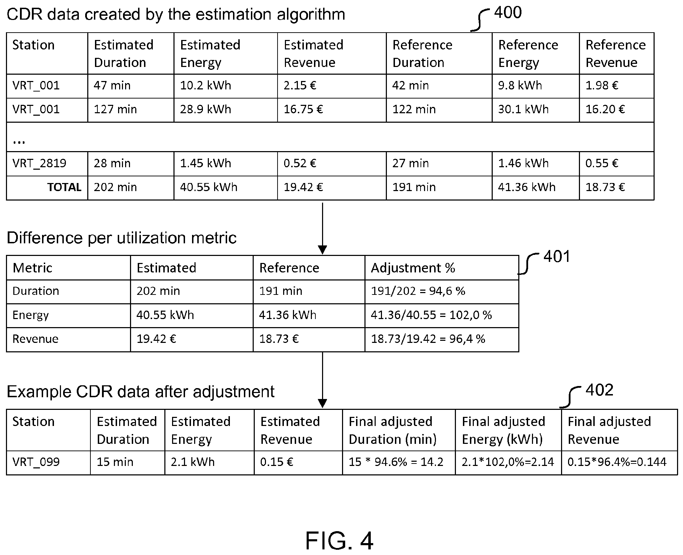

FIG. 4 illustrates an example of using adjustment factors to determine improved CDRs, according to an example embodiment.

At 400, a CDR dataset may be created based on public POI data and reference data. The CDR dataset may comprise, for example, a list of detected charges with an identifier of the charging station and estimated and reference utilization metrics for the single charge such as a duration, energy usage and revenue. The estimation utilization metrics on CDRs may be calculated with an algorithm as previously described in the description of FIGS. 1 to 3.

At 401, differences of the estimated and reference utilization metrics may be calculated based on total values of the single charges. At 402, the CDRs of the dataset may be updated with the adjustment factors by multiplying the estimated utilization metrics of each single charge with the respective adjustment factor. This enables, that accuracy of the estimated values may be improved.

The improved data of the utilization of the charging stations may be used to develop the charging network. In an embodiment, optimal locations for new charging stations may be determined based on the updated CDRs. In addition, a preferred type of charging station may be determined. For example, if there are charging stations of multiple CPOs at the same location but one of them has considerably higher utilization rate than the others, it may be determined if there is a need for more charging stations with some specific technical or user experience related design features.

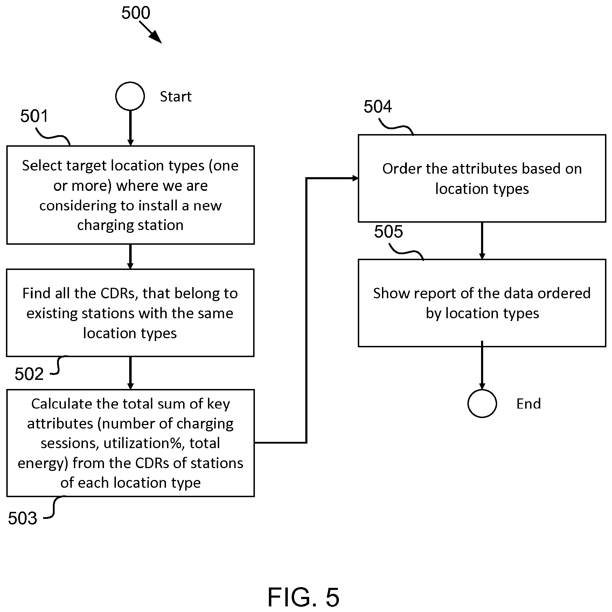

FIG. 5 illustrates an example of a flow chart 500 for determining optimal locations for electric vehicle charging stations based on generated CDRs, according to an example embodiment. Criteria for the optimal location may comprise, for example, few charging stations with high utilization rate and/or demand for the charging stations is high. The demand may be estimated, for example, based on a high used energy or high revenue from the charging stations. Locations of the charging stations may be classified based on location types to obtain a wider insight for development needs of the charging station network.

At 501, one or more target location types may be selected to install an electric vehicle charging station. The location types may comprise, for example, coordinates, cities, streets, street types, a fuel station, a shopping centre, an office building, a proximity to a specific location or building etc. The location type may be a dynamic attribute so that new location types may be added when needed. A single charging station may be associated to a plurality of location types in the CDR.

At 502, each CDR of existing charging stations associated with the selected location types may be retrieved.

At 503, a total sum of key attributes may be calculated from the CRDs of charging stations associated with each of the location types. The key attributes may be determined by a user, or they may be pre-set. The key attributes may comprise, for example, a number of charging sessions, a utilization rate, total used energy, or any of the plurality of estimate utilization metrics.

At 504, the key attributes may be ordered based on the location types.

At 505, report of the data ordered by the location types may be displayed. In an embodiment, the data may be provided based on any criteria set by a user. The criteria may comprise, for example, location types or groups of geographical locations, charging station types, thresholds for the estimate utilization metrics, or a combination thereof.

Optimal locations for the charging stations may be displayed on a map based on the aggregated location type data. The optimal locations may have already existing stations, or they may be completely new locations.

In an embodiment, data gathered from charging stations located at shopping centres may reveal good estimated utilization metrics, such as on average 40% utilization, 239 kWh of daily energy, and 235 € daily revenue. Based on this data shopping centres that do not yet have any charging stations can be searched and propose that new stations are installed there. Using the same logic, poor location types can be found, for example public streets with a low utilization rate. Hence, installing charging stations on public streets where there are not any charging stations yet may be avoided, but as an example a shopping centre close to a public street can be found to install the charging stations there.

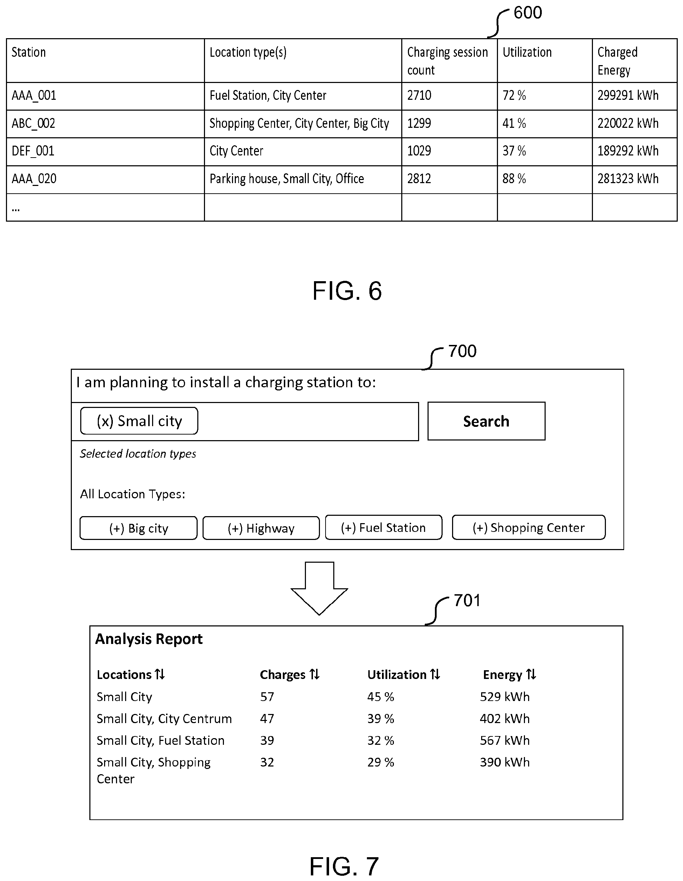

When charging stations need to be set up to a completely new locations, such as to a small city that doesn't have any previous charging stations, geographical planning may not be used since there is no reference data from that city. However, the location types and the generated CDRs may be used to estimate the usage, as illustrated in FIGS. 6 and 7.

An output data 600 may comprise a list of charging stations, associated locations types and a plurality of estimated utilization metrics for each of the charging stations. The data 600 may show, for example, that there are in total 3290 charging stations with a location type "Small City", and those station have in average 38 charging sessions a month. The user may change a set criteria for the output data using a user interface 700 to check combinations of location types of the charging stations, for example, with the "Small City" location type. The data 701 may show that "Small City, Parking House, Office" -combination has 20 sessions per month, while "Small City, Fuel Station" has 39 session per month. Based on the provided data, the user may make better decisions when developing a network of charging stations. Based on above, the user could make a conclusion that a good location for a new charging station in a small city in the case would be a fuel station in the city.

In an example embodiment, one may consider whether to install a new charging station to a fuel station, or to a shopping centre. Again, based on the location types, it may be calculated that charging stations with "fuel station" location type have on average 32 session per month, while charging stations with "shopping centre" location type have on average 42 charging sessions per month. In this case the decision would be to first search for shopping centres, that don't have yet charging stations, and install the new stations there. The decision may be based on estimated utilization metrics of a wide network of charging stations based on publicly available data instead of plain guesses or a small sample of the network based on data from charging station of only one operator.

In an example embodiment, geographical attributes on POI data may be organized hierarchically, for example, in the following way:

Continent (Europe, Asia etc.)
Country (Germany, France etc.)
Region (Bavaria, Hesse etc.)
City (Munich, Nuremberg etc.)
District (Altstadt, Lehel etc.)
Street (Ettstrasse, Löwengrube etc.)

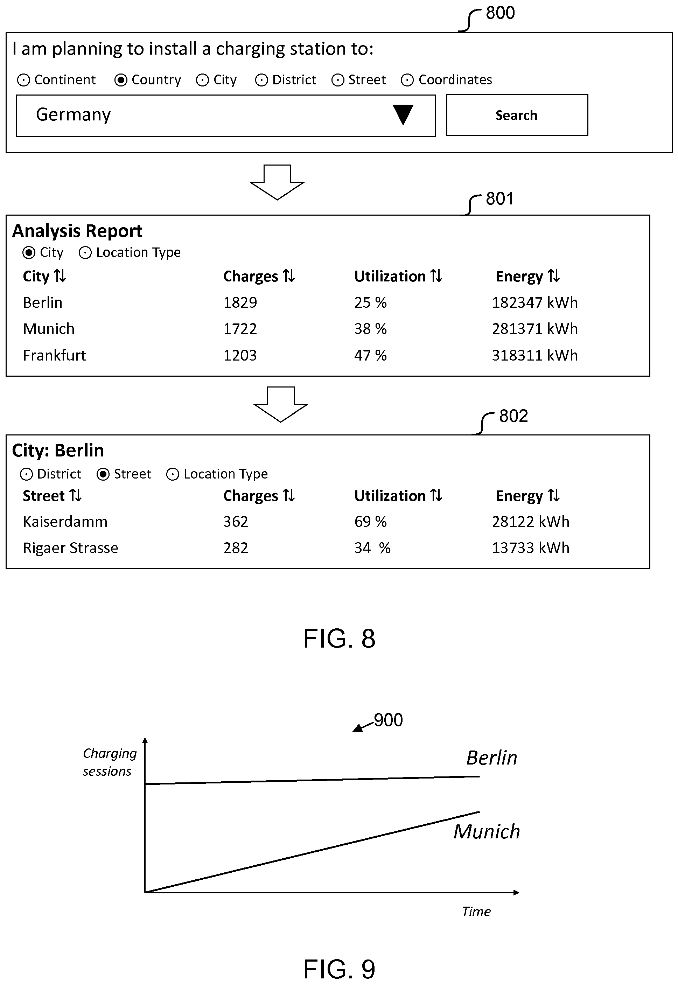

When the POI data includes these attributes, and they form a hierarchy, the POI data may be used in analysis to create reports and sort data, as illustrated in FIG. 8. For example, a European company may be interested in installing new charging stations somewhere in Europe. With the method presented above, the company may optimize the locations of the charging stations. The method may enable creating and outputting a summary report 801, 802 to compare all the countries in Europe. The user may set different criteria for the report from an interface at 800 and, for example, select a country to see statics from different cities in that country. The criteria may comprise, for example, one or more cities to see statistics form different districts in that country. In addition, the criteria may comprise, for example, one or more districts to see statistics from different streets in that district. Hence, the user may search for optimal new locations by narrowing down and trying different options based on the created estimate CDRs for the current network of charging stations.

The provided method may allow to find easily a good location where to install new charging stations, and to create early estimates of the usage of a charging station on that location. In an example embodiment, the geographical data may be combined with location type analysis. For example, the user may first search based on geographical data a city, and then switch to location type data and see statistics from different locations (fuel station, shopping center etc.) in that city.

The previous examples illustrated snapshots of current situation based on different criteria set by the user. However, when locations are planned for new charging stations, it may be important to understand trends, instead of just current status.

Just looking at a snapshot of today's situation, one might see that there are in total 5500 charges per month in Berlin, but only 4300 charges per month in Munich. Hence, one may draw a conclusion that Berlin is a better location for new charging stations. However, time series data might look like illustrated in FIG. 9. From the time series data 900 we can see that even though Berlin has more charging sessions today, the number of charging sessions in Munich is growing much faster, which makes it more attractive location.

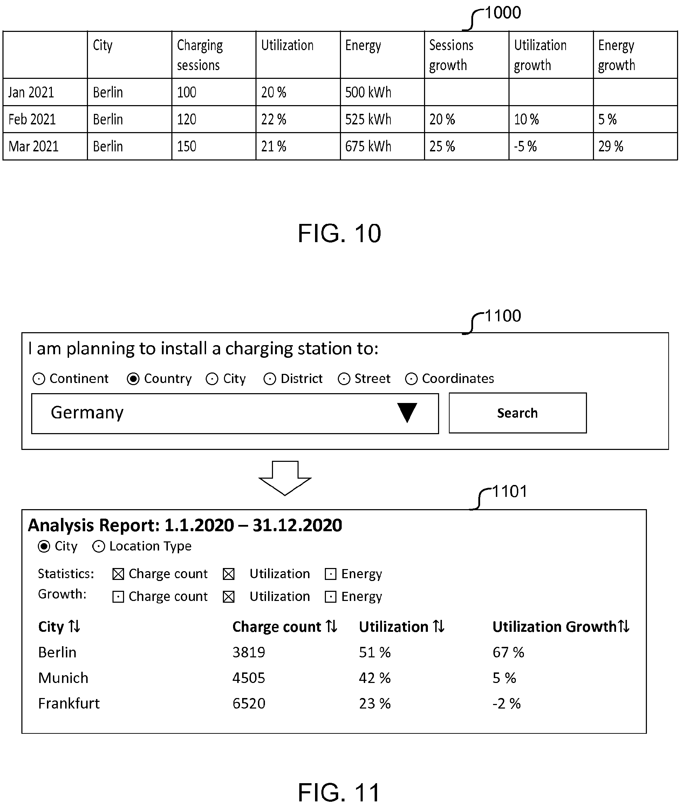

Each CDR may have a timestamp, telling when the CDR was created. Based on the timestamps, a growth factor as a percentage (%) for certain timespan (for example years 2019-2021) may be calculated. In addition, or alternatively, the growth factor may be calculated for a certain time interval (for example on a monthly level) grouped by geography or location type, as illustrated in FIG. 10 with an example of generated data 1000.

In an example embodiment, a user may select a first interval of the timespan (for example January 2021). Key measurements (one or more utilization metrics, such as charging session count, utilization %, energy) may be calculated for that timespan. Next, the user may select a second interval (for example February 2021). The same measurements may be calculated for the next interval. The measurements of the second interval may be compared to the previous interval to calculate a percentage value of growth for each interval: Growth = $Measurement_{current}/Measurement_{previous}$.

A location for a new charging station may be determined based on the estimated utilization metrics and the growth factor. Criteria for a good location may comprise, for example, a big growth percentage of charging sessions and a fairly high utilization rate, which may mean that there may be too few charging stations at the location. One or more thresholds may be determined for the growth percentage and the estimated utilization metric indicative of a good or a bad location.

FIG. 11 illustrates an example of a user interface 1100 and data 1101 provided based on selections made by a user from the user interface. Based on criteria set by the user, data may be configured to be displayed, for example, based on the growth percentage and the selected utilization metric. In FIG. 11, the example data shows that Frankfurt has most charging sessions, but utilization of stations is fairly low and growth trend is downwards. At the same time Berlin has least charging sessions, but utilization of stations is quite high, and growing fast, which means that more charging stations may be soon needed there. This makes Berlin an attractive location for new stations. The user may determine locations (based on set geography or location type) for the best locations.

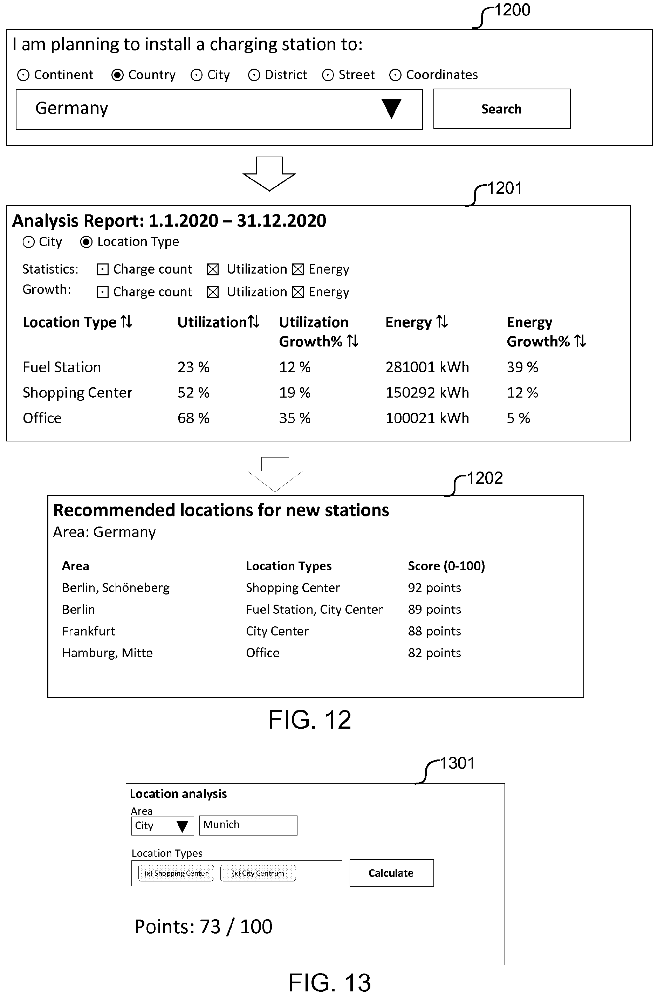

FIG. 12 illustrates another example of a user interface and data provided based on selections of the user, wherein data is displayed based on location types. Based on an analysis of location types selected by a user at 1200, the data at 1201 shows that fuel stations have fairly low utilization rate, but a lot of energy is being charged there and the amount of charged energy is growing. At the same time energy charged in office buildings is fairly low, even though utilization is high. Based on the data, the user may draw a conclusion that fuel stations are good locations for new charging stations, even though their utilization is fairly low, since a lot of energy is being charged there.

However, reading this kind of data can be a bit difficult, and requires some data analytics expertise to understand it. In an embodiment, the data may comprise recommendations 1202 for the new locations which are easy to understand for non-experts. Importantly, more accurate and fast decisions are enabled for construction of the network. The recommendations may be based on location scores. The location scores may be calculated by combining several statistics from the estimated charge detail records and set criteria. The location scores may be further based on the growth factors.

The location score may be limited to some area (for example Europe, Germany etc.) and/or to some location type. The determined data 1301 may be used to test how good a certain location is evaluated to be, as illustrated in FIG. 13. The location may not need to have any existing charging stations, but the recommendations or locations scores may provide information about whether or not the location would be optimal to install a new charging station based on the estimated CDRs and location types.

In an example embodiment, a user plans to install a new charging station to a shopping centre in the city centrum of Munich. Based on the set criteria, the location score may be calculated using a plurality of estimated utilization metrics, such as current charging sessions counts, current utilization, current energy, and growth factors of 12 months for each of the current metrics.

The location score may be calculated by determining average values of the estimated utilization metrics ang growth factors based on estimate CDRs linked to the selected geographical locations and/or location types (e.g. a certain city in Germany and a fuel station) . Best values within the estimated utilization metrics and growth factors may be determined for reference based on all CDRs from the area (e.g. Germany and all location types). The average value of the selected locations may be divided with the best value of the area and multiplied by set maximum points for the estimated utilization metric and growth factor.

For example, there may be 18 charges per month on average stations in Berlin in an office location, and the best charging station in Germany has 54 charges per month. Maximum points for the charging session count may selected as 15. Hence, the location score for charging session count may be (18/54)*15=5 points. Similarly, the location score may be calculated for each estimated utilization metric and growth factor. The location scores may be summarized to obtain a total location score for the set location/location type. In the example of FIG. 13, the total location score is 73 out of a maximum total score of 100 for the selected location criteria. The user may try how the score changes with different criteria to determine the best location out of multiple possible locations.

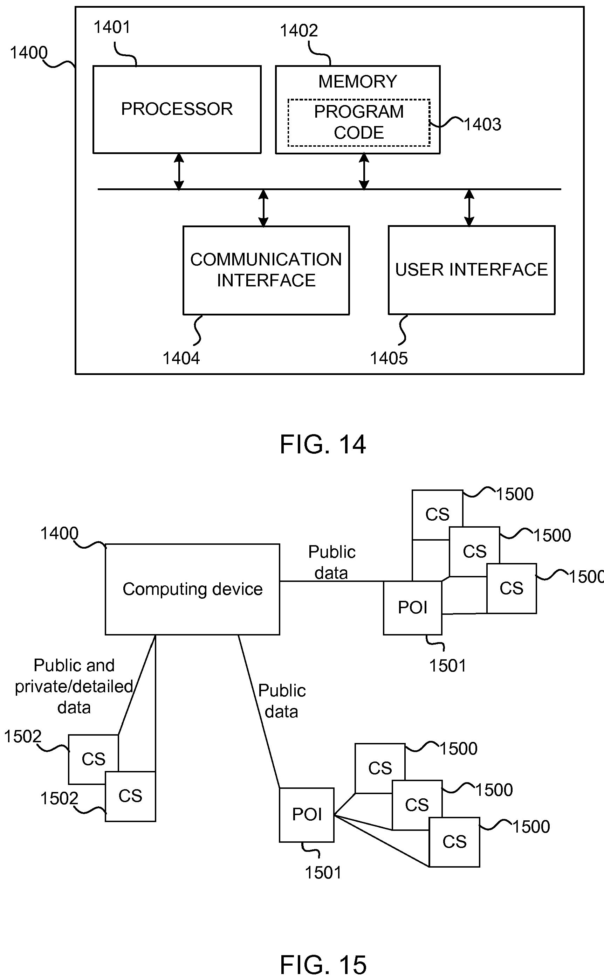

FIG. 14 illustrates an example of a computing device 1400 configured to practice one or more example embodiments, according to an example embodiment. The computing device 1400 may be configured to perform any aspect of the method described herein.

The computing device 1400 may comprise at least one processor 1401. The at least one processor 1401 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The computing device 1400 may further comprise at least one memory 1402. The memory 1402 may be configured to store, for example, computer program code 1403 or the like, for example operating system software and application software. In an embodiment, the memory 1402 may comprise EV charging station data obtained, for example, based on public POI data. The memory 1402 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

The computing device 1400 may further comprise communication interface 1405 configured to enable computing device 1400 to transmit and/or receive information, to/from other devices. The communication interface 1405 may be configured to provide at least one wireless radio connection, such as for example a 3GPP mobile broadband connection (e.g. 3G, 4G, 5G). However, the communication interface 1405 may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. The communication interface 1405 may comprise, or be configured to be coupled to, at least one antenna to transmit and/or receive radio frequency signals. One or more of the various types of connections may be also implemented as separate communication interfaces, which may be coupled or configured to be coupled to a plurality of antennas.

The computing device 1400 may be configured to obtain data from multiple data sources, as illustrated in FIG. 15. The computing device 1400 may be configured to obtain data associated to a plurality of electric vehicle charging stations 1500, for example, from one or more POI data sources 1501. The POI data may be obtained, for example, based on a pull method or a push method. In the pull method, the data may be fetched on a regular basis from a database. The data may be retrieved on configurable intervals, such as once a minute, every 5 minutes or every 15 minutes, and the retrieved data may be compared to a previous version of the same data to list differences of the data. In the push method, the data may be obtained from a provider of the data, such as a CPO of the respective charging stations. The data may be obtained, for example, as updates every time there has been a change in the data. In addition to the public data, the computing device 1400 may be configured to obtain data from a set of charging stations 1502, comprising data corresponding to the public data from other charging stations 1500 and additional data with accurate information from charging sessions at the set of the charging stations 1502. The additional data may comprise, for example, used energy per charge, duration of the charge, revenue for the charge, and/or utilization rate of the charging station.

The computing device 1400 may further comprise a user interface 1404 comprising an input device and/or an output device. The input device may take various forms such a keyboard, a touch screen, or one or more embedded control buttons. The output device may for example comprise a display, or the like.

When the computing device 1400 is configured to implement some functionality, some component and/or components of the computing device 1400, such as for example the at least one processor 1401 and/or the memory 1402, may be configured to implement this functionality. Furthermore, when the at least one processor 1401 is configured to implement some functionality, this functionality may be implemented using program code 1403 comprised, for example, in the memory 1402.

The functionality described herein may be performed, at least in part, by one or more computer program product components such as software components. According to an embodiment, the computing device 1400 comprises a processor 1401 or processor circuitry, such as for example a microcontroller, configured by the program code 1403 when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The computing device 1400 comprises means for performing at least one method described herein. In one example, the means comprises the at least one processor 1401, the at least one memory 1402 including program code 1403 configured to, when executed by the at least one processor 1401, cause the computing device 1400 to perform the method.

The computing device 1400 may comprise for example a server device, a client device, a mobile phone, a tablet computer, a laptop, or the like. Although the computing device 1400 is illustrated as a single device it is appreciated that, wherever applicable, functions of the computing device 1400 may be distributed to a plurality of devices.

It is obvious to a person skilled in the art that with the advancement of technology, the basic idea may be implemented in various ways. The aspects and their embodiments are thus not limited to the examples described above, instead they may vary within the scope of the claims.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item, 'at least one' item, and 'one or more' items may refer to one or more of those items or a plurality of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

**Claims**

1.  A computer-implemented method, comprising:

    obtaining, from publicly available data sources (100, 101, 102, 200), attributes of a plurality of electric vehicle charging stations of different operators, the attributes comprising location information, a maximum power, and state changes associated to a charge of an electric vehicle of each of the plurality of electric vehicle charging stations;
    obtaining reference data (202) comprising known values for a plurality of utilization metrics obtained from a set of the plurality of electric vehicle charging stations and an average charging power calculated based on the plurality of utilization metrics for each category of the plurality of charging stations selected based on their maximum powers, the plurality of utilization metrics comprising used energy and a duration for charges of the set of electric vehicle charging stations;
    determining (302, 400) an estimate charge detail record (201, 203) comprising a plurality of estimate utilization metrics (303) for each of the plurality of electric vehicle charging stations based on said attributes of said plurality of electric vehicle charging stations and the reference data, the estimate utilization metrics (303) comprising a duration of the charge based on consecutive state changes and timestamps of the state changes and used energy based on the duration of the charge and the average charging power value of the category of the respective electric vehicle charging station;
determining (304) combined values for at least one of the used energy or the duration for the set of the plurality of electric vehicle charging stations based on the reference data and based on the estimate charge detail records of the set of the plurality of the electric vehicle charging stations;
determining (305) an adjustment factor for at least one estimate utilization metric based on a difference between the combined value determined based on the estimate charge detail records of the set of the plurality of electric vehicle charging stations and the combined value determined based on the reference data; and
updating (306) each of the estimate charge detail records of the plurality of electric vehicle charging stations based on the at least one adjustment factor;
determining one or more location types for each of the estimate charge detail records for each of the plurality of electric vehicle charging stations based on location information of the respective charging station;
obtaining criteria (501, 1200) for installation of a new electric vehicle charging station from a user, the criteria comprising at least one location type for which a new electric vehicle charging station is considered to be installed;
determining optimal locations to install the new electric vehicle charging station (505, 600, 701, 801, 802, 1000, 1101, 1201, 1202, 1301) based on the estimate charge detail records for each of the plurality of electric vehicle charging stations and the criteria;
outputting data to display the determined optimal locations to be used by the user to install the new electric vehicle charging station (505, 600, 701, 801, 802, 1000, 1101, 1201, 1202, 1301), wherein the data is indicative of utilization of electric vehicle charging stations by a location type based on the estimate charge detail records for each of the electric vehicle charging stations and the criteria; and
installing said new electric vehicle charging station.

2.  The computer-implemented method of claim 1, wherein the attributes comprise a maximum power and the plurality of electric vehicle charging stations are categorized based on their maximum power; and

    the reference data (202) comprises an average charging power for each category; and
    wherein the used energy in the estimate charge detail record is determined based on the average power of the category of the respective electric vehicle charging station.

3. The computer-implemented method of claim 1or 2, wherein the estimate utilization metrics comprise a revenue indicative of a user demand determined based on the used energy, the duration, a session fee, a price per minute and a price per kilowatt-hour.

4. The computer-implemented method of any of previous claim, wherein the plurality of estimate utilization metrics comprise a number of charges based on a number of the consecutive state changes.

5. The computer-implemented method of any of previous claim, wherein the plurality of estimate utilization metrics comprise a utilization rate based on a total duration of charges of a day divided by minutes of the day.

6. The computer-implemented method of any of previous claim, wherein each estimate charge detail record comprises a timestamp; and
wherein the criteria comprise at least one time interval and the outputted data comprises a growth factor (1000) for at least one of the estimate utilization metrics based on the criteria and the timestamps of the estimate charge detail records.

7. The computer-implemented method of any of previous claim wherein the attributes comprise model information of the electric vehicle charging station, and the output data comprises a preferred type of a charging station based on the estimate utilization metrics.

8. The computer-implemented method of any of previous claim, wherein the criteria comprise one or more thresholds for at least one of the estimate utilization metrics or the growth factors, and the output data comprises recommendations (1202) for locations to install a new charging station based on the one or more thresholds.

9. The computer-implemented method of any of previous claim, wherein the criteria comprise at least one of a geographical location, a group of geographical locations, one or more location types, one or more thresholds for an optimal location, or one or more estimate utilization metrics.

10. The computer-implemented method of any of previous claim, wherein the method comprises:

determining a location score for a certain location based on the criteria and the estimate charge detail records associated with the location; and

wherein the output data comprises the location score.

11. A computing device (1400), the computing device (1400) comprising:

at least one processor (1401); and
at least one memory (1402) including computer program code (1403);
the at least one memory (1402) and the computer code (1403) configured to, with the at least one processor (1401), cause the computing device (1400) to perform the method of any of claim 1 to 10.

12. A computer program product (1403) comprising instructions which, when the program is executed by a computer, cause the computer to carry out the method of any of claims 1 to 10.

13. A computer-readable medium comprising instructions which, when executed by a computer, cause the computer to carry out the method of any of claims 1 to 10.

**Patentansprüche**

1. Computerimplementiertes Verfahren, umfassend:
Erhalten, von öffentlich verfügbaren Datenquellen (100, 101, 102, 200), von Attributen von einer Vielzahl von Ladestationen für Elektrofahrzeuge von unterschiedlichen Betreibern, wobei die Attribute Ortsinformation, eine maximale Leistung und Änderungszustände, die mit einem Laden eines Elektrofahrzeugs von jeder der Vielzahl von Ladestationen für Elektrofahrzeuge verbunden sind, umfassen;

Erhalten von Referenzdaten (202), die bekannte Werte für eine Vielzahl von Nutzungsmetriken, die aus einem Satz der Vielzahl von Ladestationen für Elektrofahrzeuge erhalten werden, und eine durchschnittliche Ladeleistung, die basierend auf der Vielzahl von Nutzungsmetriken für jede Kategorie der Vielzahl von Ladestationen basierend auf ihren maximalen Leistungen erhalten wird, umfassen, wobei die Vielzahl von Nutzungsmetriken verbrauchte Energie und eine Dauer für Ladungen des Satzes von Ladestationen für Elektrofahrzeuge umfasst;
Bestimmen (302, 400) eines Schätzungs-Ladedetaildatensatzes (201, 203), der eine Vielzahl von Schätzungs-Nutzungsmetriken (303) für jede der Vielzahl von Ladestationen für Elektrofahrzeuge basierend auf den Attributen der Vielzahl von Ladestationen für Elektrofahrzeuge und den Referenzdaten umfasst, wobei die Schätzungs-Nutzungsmetriken (303) eine Dauer des Ladens basierend auf aufeinanderfolgenden Zustandsänderungen und Zeitstempeln der Zustandsänderungen und verbrauchte Energie basierend auf der Dauer des Ladens und dem durchschnittlichen Ladeleistungswert der Kategorie der jeweiligen Ladestation für Elektrofahrzeuge umfassen;

Bestimmen (304) kombinierter Werte für die verbrauchte Energie und/oder die Dauer für den Satz der Vielzahl von Ladestationen für Elektrofahrzeuge basierend auf den Referenzdaten und basierend auf den Schätzungs-Ladedetaildatensätzen des Satzes der Vielzahl der Ladestationen für Elektrofahrzeuge;

Bestimmen (305) eines Anpassungsfaktors für mindestens eine Schätzungs-Nutzungsmetrik basierend auf einer Differenz zwischen dem kombinierten Wert, der basierend auf den Schätzungs-Ladedetaildatensätzen des Satzes der Vielzahl von Ladestationen für Elektrofahrzeuge bestimmt ist, und dem kombinierten Wert der basierend auf den Referenzdaten bestimmt ist; und Aktualisieren (306) von jedem der Schätzungs-Ladedetaildatensätze der Vielzahl von Ladestationen für Elektrofahrzeuge basierend auf dem mindestens einen Anpassungsfaktor;

Bestimmen von einem oder mehreren Standorttypen für jeden der Schätzungs-Ladedetaildatensätze für jede der Vielzahl von Ladestationen für Elektrofahrzeuge basierend auf Standortinformation der jeweilig Ladestation;

Erhalten von Kriterien (501, 1200) zur Installation einer neuen Ladestation für Elektrofahrzeuge von einem Benutzer, wobei die Kriterien mindestens einen Standorttyp umfassen, für den eine neue Ladestation für Elektrofahrzeuge installiert werden soll; Bestimmen von optimalen Standorten zur Installation der neuen Ladestation für Elektrofahrzeuge (505, 600, 701, 801, 802, 1000, 1101, 1201, 1202, 1301) basierend auf den Schätzungs-Ladedetaildatensätzen für jede der Vielzahl von Ladestationen für Elektrofahrzeuge und den Kriterien;

Ausgeben von Daten zur Anzeige der bestimmten optimalen Standorte, die von dem Benutzer zur Installation der neuen Ladestation für Elektrofahrzeuge (505, 600, 701, 801, 802, 1000, 1101, 1201, 1202, 1301) verwendet werden sollen, wobei die Daten für eine Nutzung von Ladestationen für Elektrofahrzeuge durch einen Standorttyp basierend auf den Schätzungs-Ladedetaildatensätzen für jede der Ladestationen für Elektrofahrzeuge und den Kriterien indikativ sind; und Installieren der neuen Ladestation für Elektrofahrzeuge.

2. Computerimplementiertes Verfahren nach Anspruch 1, wobei die Attribute eine maximale Leistung umfassen und die Vielzahl von Ladestationen für Elektrofahrzeuge basierend auf ihrer maximalen Leistung kategorisiert sind; und

die Referenzdaten (202) eine durchschnittliche Ladeleistung für jede Kategorie umfassen; und wobei die verbrauchte Energie in dem Schätzungs-Ladedetaildatensatz basierend auf der durchschnittlichen Leistung der Kategorie der jeweiligen Ladestation für Elektrofahrzeuge bestimmt wird.

3. Computerimplementiertes Verfahren nach Anspruch 1 oder 2, wobei die Schätzungs-Nutzungsmetriken einen Umsatz umfassen, der eine Benutzernachfrage angibt, die basierend auf der verbrauchten Energie, der Dauer, einer Sitzungsgebühr, einem Preis pro Minute und einem Preis pro Kilowattstunde bestimmt wird.

4. Computerimplementiertes Verfahren nach einem der vorhergehenden Ansprüche, wobei die Vielzahl von Schätzungs-Nutzungsmetriken eine Anzahl von Ladungen basierend auf einer Anzahl der aufeinanderfolgenden Zustandsänderungen umfasst.

5. Computerimplementiertes Verfahren nach einem der vorhergehenden Ansprüche, wobei die Vielzahl von Schätzungs-Nutzungsmetriken eine Nutzungsrate basierend auf einer Gesamtdauer von Ladungen eines Tages geteilt durch Minuten des Tages umfasst.

6. Computerimplementiertes Verfahren nach einem der vorhergehenden Ansprüche, wobei jeder Schätzungs-Ladungsdetaildatensatz einen Zeitstempel umfasst; und

wobei die Kriterien mindestens ein Zeitintervall umfassen und die ausgegebenen Daten einen Wachstumsfaktor (1000) für mindestens eine der Schätzungs-Nutzungsmetriken basierend auf den Kriterien und den Zeitstempeln der Schätzungs-Ladedetaildatensätze umfassen.

7. Computerimplementiertes Verfahren nach einem der vorhergehenden Ansprüche, wobei die Attribute Modellinformationen der Ladestation für Elektrofahrzeuge umfassen und die Ausgabedaten einen bevorzugten Typ einer Ladestation basierend auf den Schätzungs-Nutzungsmetriken umfassen.

8. Computerimplementiertes Verfahren nach einem der vorhergehenden Ansprüche, wobei die Kriterien einen oder mehrere Schwellenwerte für mindestens eine der Schätzungs-Nutzungsmetriken oder die Wachstumsfaktoren umfassen und die Ausgabedaten Empfehlungen (1202) für Standorte zum Installieren einer neuen Ladestation basierend auf dem einen oder den mehreren Schwellenwerten umfassen.

9. Computerimplementiertes Verfahren nach einem der vorhergehenden Ansprüche, wobei die Kriterien mindestens eines von einem geografischen Standort, einer Gruppe von geografischen Standorten, einem oder mehreren Standorttypen, einem oder mehreren Schwellenwerten für einen optimalen Standort oder einer oder mehreren Schätzungs-Nutzungsmetriken umfassen.

10. Computerimplementiertes Verfahren nach einem der vorhergehenden Ansprüche, wobei das Verfahren umfasst:

   Bestimmen einer Standortbewertung für einen bestimmten Standort basierend auf den Kriterien und den Schätzungs-Ladedetaildatensätzen, die mit dem Standort verbunden sind; und wobei die Ausgabedaten die Standortbewertung umfassen.

11. Rechenvorrichtung (1400), wobei die Rechenvorrichtung (1400) umfasst:

   mindestens einen Prozessor (1401); und mindestens einen Speicher (1402), der Computerprogrammcode (1403) enthält; wobei der mindestens eine Speicher (1402) und der Computercode (1403) konfiguriert sind, um mit dem mindestens einen Prozessor (1401) zu bewirken, dass die Rechenvorrichtung (1400) das Verfahren nach einem der Ansprüche 1 bis 10 ausführt.

12. Computerprogrammprodukt (1403), umfassend Anweisungen, die, wenn das Programm von einem Computer ausgeführt wird, bewirken, dass der Computer das Verfahren nach einem der Ansprüche 1 bis 10 ausführt.

13. Computerlesbares Medium, umfassend Anweisungen, die, wenn sie von einem Computer ausgeführt werden, bewirken, dass der Computer das Verfahren nach einem der Ansprüche 1 bis 10 ausführt.

**Revendications**

1. Procédé mis en œuvre par un ordinateur, comprenant :

   l'obtention, à partir de sources de données (100, 101, 102, 200) accessibles publiquement, d'attributs d'une pluralité de stations de charge de véhicule électrique de différents opérateurs, les attributs comprenant des informations d'emplacement, une puissance maximale, et des changements d'état associés à une charge d'un véhicule électrique de chaque station de la pluralité de stations de charge de véhicule électrique ;
l'obtention de données de référence (202) comprenant des valeurs connues pour une pluralité de mesures d'utilisation obtenues à partir d'un ensemble de stations de la pluralité de stations de charge de véhicule électrique et une puissance de charge moyenne calculée sur la base de la pluralité de mesures d'utilisation pour chaque catégorie de la pluralité de stations de charge sélectionnées sur la base de leurs puissances maximales, la pluralité de mesures d'utilisation comprenant l'énergie utilisée et une durée pour charges de l'ensemble de stations de charge de véhicule électrique ;
la détermination (302, 400) d'un enregistrement de détail de charge d'estimation (201, 203) comprenant une pluralité de mesures d'utilisation d'estimation (303) pour chaque station de la pluralité de stations de charge de véhicule électrique sur la base desdits attributs de ladite pluralité de stations de charge de véhicule électrique et des données de référence, les mesures d'utilisation d'estimation (303), comprenant une durée de la charge sur la base de changements d'état consécutifs et d'estampilles temporelles des changements d'état, et l'énergie utilisée sur la base de la durée de la charge et de la valeur de puissance de charge moyenne de la catégorie de la station de charge de véhicule électrique respective ;
la détermination (304) de valeurs combinées pour au moins une parmi l'énergie utilisée ou la durée pour l'ensemble de la pluralité de stations de charge de véhicule électrique sur la base des données de référence et sur la base des enregistrements de détail de charge d'estimation de l'ensemble de la pluralité des stations de charge de véhicule électrique ;
la détermination (305) d'un facteur d'ajustement pour au moins une mesure d'utilisation d'estimation sur la base d'une différence entre la valeur combinée déterminée sur la base des enregistrements de détail de charge d'estimation de l'ensemble de la pluralité de stations de charge de véhicule électrique et la valeur combinée déterminée sur la base des données de référence ; et
la mise à jour (306) de chacun des enregistrements de détail de charge d'estimation de la pluralité de stations de charge de véhicule électrique sur la base du au moins un facteur d'ajustement ;
la détermination d'un ou plusieurs types d'emplacement pour chacun des enregistrements de détail de charge d'estimation pour chaque station de la pluralité de stations de charge de véhicule électrique sur la base d'informations d'emplacement de la station de charge respective ;

l'obtention de critères (501, 1200) pour l'installation d'une nouvelle station de charge de véhicule électrique à partir d'un utilisateur, les critères comprenant au moins un type d'emplacement pour lequel on considère qu'une nouvelle station de charge de véhicule électrique doit être installée ;

la détermination d'emplacements optimaux pour installer la nouvelle station de charge de véhicule électrique (505, 600, 701, 801, 802, 1000, 1101, 1201, 1202, 1301) sur la base des enregistrements de détail de charge d'estimation pour chaque station de la pluralité de stations de charge de véhicule électrique et sur la base des critères ;

la délivrance en sortie de données pour afficher les emplacements optimaux déterminés à utiliser par l'utilisateur pour installer la nouvelle station de charge de véhicule électrique (505, 600, 701, 801, 802, 1000, 1101, 1201, 1202, 1301), dans lequel les données indiquent l'utilisation de stations de charge de véhicule électrique par un type d'emplacement sur la base des enregistrements de détail de charge d'estimation pour chacune des stations de charge de véhicule électrique et sur la base des critères ; et l'installation de ladite nouvelle station de charge de véhicule électrique.

2. Procédé mis en œuvre par ordinateur selon la revendication 1, dans lequel les attributs comprennent une puissance maximale et la pluralité de stations de charge de véhicule électrique sont catégorisées sur la base de leur puissance maximale ; et

les données de référence (202) comprennent une puissance de charge moyenne pour chaque catégorie ; et

dans lequel l'énergie utilisée dans l'enregistrement de détail de charge d'estimation est déterminée sur la base de la puissance moyenne de la catégorie de la station de charge de véhicule électrique respective.

3. Procédé mis en œuvre par ordinateur selon la revendication 1 ou la revendication 2, dans lequel les mesures d'utilisation d'estimation comprennent un revenu indicatif d'une demande utilisateur déterminée sur la base de l'énergie utilisée, de la durée, de frais de session, d'un prix par minute et d'un prix par kilowatt-heure.

4. Procédé mis en œuvre par ordinateur selon une quelconque revendication précédente, dans lequel la pluralité de mesures d'utilisation d'estimation comprennent un nombre de charges basée sur un nombre des changements d'état consécutifs.

5. Procédé mis en œuvre par ordinateur selon une quelconque revendication précédente, dans lequel la pluralité de mesures d'utilisation d'estimation comprennent un taux d'utilisation basé sur une durée totale de charges d'une journée divisée par les minutes de la journée.

6. Procédé mis en œuvre par ordinateur selon une quelconque revendication précédente, dans lequel chaque enregistrement de détail de charge d'estimation comprend une estampille temporelle ; et dans lequel les critères comprennent au moins un intervalle de temps et les données délivrées en sortie comprennent un facteur de croissance (1000) pour au moins l'une des mesures d'utilisation d'estimation sur la base des critères et des estampilles temporelles des enregistrements de détail de charge d'estimation.

7. Procédé mis en œuvre par ordinateur selon une quelconque revendication précédente, dans lequel les attributs comprennent des informations de modèle de la station de charge de véhicule électrique, et les données délivrées en sortie comprennent un type préféré d'une station de charge basé sur les mesures d'utilisation d'estimation.

8. Procédé mis en œuvre par ordinateur selon une quelconque revendication précédente, dans lequel les critères comprennent un ou plusieurs seuils pour au moins l'un parmi les mesures d'utilisation d'estimation ou les facteurs de croissance, et les données délivrées en sortie comprennent des recommandations (1202) d'emplacements pour installer une nouvelle station de charge sur la base des un ou plusieurs seuils.

9. Procédé mis en œuvre par ordinateur selon une quelconque revendication précédente, dans lequel les critères comprennent au moins l'un parmi un emplacement géographique, un groupe d'emplacements géographiques, un ou plusieurs types d'emplacement, un ou plusieurs seuils pour un emplacement optimal, ou une ou plusieurs mesures d'utilisation d'estimation.

10. Procédé mis en œuvre par ordinateur selon une quelconque revendication précédente, dans lequel le procédé comprend :

la détermination d'un score d'emplacement pour un certain emplacement sur la base des critères et des enregistrements de détail de charge d'estimation associés à l'emplacement ; et

dans lequel les données délivrées en sortie comprennent le score d'emplacement.

11. Dispositif informatique (1400), le dispositif informatique (1400) comprenant :

au moins un processeur (1401) ; et
au moins une mémoire (1402) incluant un code de programme d'ordinateur (1403) ;
la au moins une mémoire (1402) et le code informatique (1403) étant configurés pour, avec le au moins un processeur (1401), amener le dispositif informatique (1400) à mettre en œuvre le procédé selon l'une quelconque des revendications 1 à 10.

12. Produit de programme d'ordinateur (1403) comprenant des instructions qui, lorsque le programme est exécuté par un ordinateur, amènent l'ordinateur à mettre en œuvre le procédé selon l'une quelconque des revendications 1 à 10.

13. Support lisible par ordinateur comprenant des instructions qui, lorsqu'elles sont exécutées par un ordinateur, amènent l'ordinateur à mettre en œuvre le procédé selon l'une quelconque des revendications 1 à 10.

First POI dataset at 2021-09-28 12:00:00    ⌐ 100

| Station ID | Address | Status | ... |
|------------|---------|--------|-----|
| VRT_0001 | Street A 1 | Available | Other POI data |
| SER_A_324 | Avenue B 2 | Available | Other POI data |

Second POI dataset at 2021-09-28 12:05:00    ⌐ 101

| Station ID | Address | Status | ... |
|------------|---------|--------|-----|
| VRT_0001 | Street A 1 | **Occupied** | Other POI data |
| SER_A_324 | Avenue B 2 | Available | Other POI data |

Nth POI dataset at 2021-09-28 15:07:00    ⌐ 102

| Station ID | Address | Status | ... |
|------------|---------|--------|-----|
| VRT_0001 | Street A 1 | **Available** | Other POI data |
| SER_A_324 | Avenue B 2 | Available | Other POI data |

⌐ 103_1

| Station ID | Start Time | Stop Time |
|------------|------------|-----------|
| VRT_0001 | 2021-09-28 12:05:00 | |

⌐ 103_2

| Station ID | Start Time | Stop Time |
|------------|------------|-----------|
| VRT_0001 | 2021-09-28 12:05:00 | 2021-09-28 15:07:00 |

# FIG. 1

| Station: ST_AA_001 | |
|---|---|
| Maximum power: | 10 kW |

*200*

| Charge Detail Record | |
|---|---|
| Station: | ST_AA_001 |
| Start: | 2021-05-09 12:00 |
| End: | 2021-05-09 15:00 |
| Duration: | 3,0 h |

*201*

| Reference data | |
|---|---|
| Power: | 3.7 - 11 kW |
| Average charging power: | 9.87 kW |

*202*

| Charge Detail Record | |
|---|---|
| Station: | ST_AA_001 |
| Start: | 2021-05-09 12:00 |
| End: | 2021-05-09 15:00 |
| Duration: | 3,0 h |
| **Energy:** | **3,0 h * 9,87 kW = 29,61 kWh** |

*203*

## FIG. 2

300

301
Select set of CDRs from a detailed reference dataset with known values

302
Create the estimation CDR dataset using the previously described algorithm, based on public POI data

303
Summarize the estimation dataset for three different metrics: duration, energy and revenue

Start

304
Calculate the same metrics (duration, energy, revenue) using the detailed reference dataset

305
Calculate adjustment factor (%) to each metric

306
Use the adjustment factors to create final metrics on estimation dataset

End

307
Once we have new data (reference data and estimation calculations), repeat the process with including previous adjustment factors to the estimation dataset, and calculate new updated adjustment factors

FIG. 3

CDR data created by the estimation algorithm ⌐ 400

| Station | Estimated Duration | Estimated Energy | Estimated Revenue | Reference Duration | Reference Energy | Reference Revenue |
|---------|-------------------|------------------|-------------------|-------------------|------------------|-------------------|
| VRT_001 | 47 min | 10.2 kWh | 2.15 € | 42 min | 9.8 kWh | 1.98 € |
| VRT_001 | 127 min | 28.9 kWh | 16.75 € | 122 min | 30.1 kWh | 16.20 € |
| ... | | | | | | |
| VRT_2819 | 28 min | 1.45 kWh | 0.52 € | 27 min | 1.46 kWh | 0.55 € |
| **TOTAL** | 202 min | 40.55 kWh | 19.42 € | 191 min | 41.36 kWh | 18.73 € |

Difference per utilization metric

| Metric | Estimated | Reference | Adjustment % |
|--------|-----------|-----------|--------------|
| Duration | 202 min | 191 min | 191/202 = 94,6 % |
| Energy | 40.55 kWh | 41.36 kWh | 41.36/40.55 = 102,0 % |
| Revenue | 19.42 € | 18.73 € | 18.73/19.42 = 96,4 % |

⌐ 401

Example CDR data after adjustment ⌐ 402

| Station | Estimated Duration | Estimated Energy | Estimated Revenue | Final adjusted Duration (min) | Final adjusted Energy (kWh) | Final adjusted Revenue |
|---------|-------------------|------------------|-------------------|-------------------------------|------------------------------|------------------------|
| VRT_099 | 15 min | 2.1 kWh | 0.15 € | 15 * 94.6% = 14.2 | 2.1*102,0%=2.14 | 0.15*96.4%=0.144 |

# FIG. 4

500

Start

501

Select target location types (one or more) where we are considering to install a new charging station

Find all the CDRs, that belong to existing stations with the same location types

502

Calculate the total sum of key attributes (number of charging sessions, utilization%, total energy) from the CDRs of stations of each location type

503

504

Order the attributes based on location types

505

Show report of the data ordered by location types

End

FIG. 5

600

| Station | Location type(s) | Charging session count | Utilization | Charged Energy |
|---------|------------------|------------------------|-------------|----------------|
| AAA_001 | Fuel Station, City Center | 2710 | 72 % | 299291 kWh |
| ABC_002 | Shopping Center, City Center, Big City | 1299 | 41 % | 220022 kWh |
| DEF_001 | City Center | 1029 | 37 % | 189292 kWh |
| AAA_020 | Parking house, Small City, Office | 2812 | 88 % | 281323 kWh |
| ... | | | | |

# FIG. 6

700

I am planning to install a charging station to:

[ (x) Small city ]          **Search**

*Selected location types*

All Location Types:

[ (+) Big city ]  [ (+) Highway ]  [ (+) Fuel Station ]  [ (+) Shopping Center ]

701

**Analysis Report**

| Locations ⇅ | Charges ⇅ | Utilization ⇅ | Energy ⇅ |
|-------------|-----------|---------------|----------|
| Small City | 57 | 45 % | 529 kWh |
| Small City, City Centrum | 47 | 39 % | 402 kWh |
| Small City, Fuel Station | 39 | 32 % | 567 kWh |
| Small City, Shopping Center | 32 | 29 % | 390 kWh |

# FIG. 7

800

I am planning to install a charging station to:

⊙ Continent  ◉ Country  ⊙ City  ⊙ District  ⊙ Street  ⊙ Coordinates

| Germany ▼ | Search |

801

**Analysis Report**
◉ City  ⊙ Location Type

| City ⇅ | Charges ⇅ | Utilization ⇅ | Energy ⇅ |
|---|---|---|---|
| Berlin | 1829 | 25 % | 182347 kWh |
| Munich | 1722 | 38 % | 281371 kWh |
| Frankfurt | 1203 | 47 % | 318311 kWh |

802

**City: Berlin**
⊙ District  ◉ Street  ⊙ Location Type

| Street ⇅ | Charges ⇅ | Utilization ⇅ | Energy ⇅ |
|---|---|---|---|
| Kaiserdamm | 362 | 69 % | 28122 kWh |
| Rigaer Strasse | 282 | 34 % | 13733 kWh |

FIG. 8

900

FIG. 9

|  | City | Charging sessions | Utilization | Energy | Sessions growth | Utilization growth | Energy growth |
|---|---|---|---|---|---|---|---|
| Jan 2021 | Berlin | 100 | 20 % | 500 kWh |  |  |  |
| Feb 2021 | Berlin | 120 | 22 % | 525 kWh | 20 % | 10 % | 5 % |
| Mar 2021 | Berlin | 150 | 21 % | 675 kWh | 25 % | -5 % | 29 % |

$\cap$1000

# FIG. 10

$\cap$1100

**I am planning to install a charging station to:**

⊙ Continent  ◉ Country  ⊙ City  ⊙ District  ⊙ Street  ⊙ Coordinates

| Germany ▼ | **Search** |

$\cap$1101

**Analysis Report: 1.1.2020 – 31.12.2020**
◉ City  ⊙ Location Type

Statistics:  ☒ Charge count  ☒ Utilization  ☐ Energy
Growth:  ☐ Charge count  ☒ Utilization  ☐ Energy

| City ⇅ | Charge count ⇅ | Utilization ⇅ | Utilization Growth⇅ |
|---|---|---|---|
| Berlin | 3819 | 51 % | 67 % |
| Munich | 4505 | 42 % | 5 % |
| Frankfurt | 6520 | 23 % | -2 % |

# FIG. 11

1200

| I am planning to install a charging station to: |
|---|

⊙ Continent    ⦿ Country    ⊙ City    ⊙ District    ⊙ Street    ⊙ Coordinates

| Germany ▼ | Search |
|---|---|

1201

## Analysis Report: 1.1.2020 – 31.12.2020

⊙ City    ⦿ Location Type

Statistics:    ⊡ Charge count    ⊠ Utilization ⊠ Energy

Growth:    ⊡ Charge count    ⊠ Utilization ⊠ Energy

| Location Type ⇅ | Utilization ⇅ | Utilization Growth% ⇅ | Energy ⇅ | Energy Growth% ⇅ |
|---|---|---|---|---|
| Fuel Station | 23 % | 12 % | 281001 kWh | 39 % |
| Shopping Center | 52 % | 19 % | 150292 kWh | 12 % |
| Office | 68 % | 35 % | 100021 kWh | 5 % |

1202

## Recommended locations for new stations

Area: Germany

| Area | Location Types | Score (0-100) |
|---|---|---|
| Berlin, Schöneberg | Shopping Center | 92 points |
| Berlin | Fuel Station, City Center | 89 points |
| Frankfurt | City Center | 88 points |
| Hamburg, Mitte | Office | 82 points |

## FIG. 12

1301

**Location analysis**

Area

| City ▼ | Munich |
|---|---|

Location Types

| (x) Shopping Center | (x) City Centrum | | Calculate |
|---|---|---|---|

## Points: 73 / 100

## FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10083413 B2